# EUROPÄISCHE PATENTANMELDUNG

(11) **EP 3 786 665 A1**
(43) Veröffentlichungstag der Anmeldung: **03.03.2021**
(21) Anmeldenummer: 20188085.3
(22) Anmeldetag: 28.07.2020
(51) Int. Cl.: G01S 7/481, G01S 17/42

(54) **LASERSCANNER**

(30) Priorität: 29.08.2019 DE 102019123217
(71) Anmelder: SICK AG, 79183 Waldkirch (DE)
(72) Erfinder: Eisele, Florian, 79108 Freiburg (DE)

(57) **Zusammenfassung**

Laserscanner (1) mit einer Vielzahl von Sendeelementen (2) und einer Vielzahl von Empfangselementen (3) und einer Steuer- und Auswerteeinheit (4) zur Auswertung der Lichtlaufzeit von Lichtstrahlen (7) von den Sendeelementen (2) über ein Objekt (5) zu den Empfangselementen (3), wobei die Sendeelemente (2) und die Empfangselemente (3) bogenabschnittsförmig in einem gemeinsamen Gehäuse (6) angeordnet sind, wobei die Lichtstrahlen (7) in verschiedenen Winkelrichtungen fächerförmig ausgesendet und/oder empfangen werden, wobei vor jedem Empfangselement (3) mindestens eine gemeinsame bogenabschnittsförmige Linse (8) angeordnet ist.

## Beschreibung

Die vorliegende Erfindung betrifft einen Laserscanner nach dem Oberbegriff von Anspruch 1.

Zur Bereichsabsicherung werden Laserscanner eingesetzt, die Lichtpulse aussenden und das remittierte Licht nach dem Lichtlaufzeitverfahren auswerten. Dabei ist sowohl eine hohe Winkelauflösung, als auch eine hohe Reichweite erwünscht.

Laserscanner nach dem Stand der Technik weisen eine mechanisch rotierbare Optik auf. Mit der um eine Z-Achse rotierbaren, meist relativ großen Optik wird in fast beliebigen kleinen Winkelschritten Licht ausgesendet und das aus der aktuellen Richtung aus dem Überwachungsbereich remittierte Licht wird in einer Steuer- und Auswerteeinheit ausgewertet. Dank der großen Optik ist eine lichtstarke Auswertung des remittierten Lichts möglich und dadurch kann eine hohe Empfindlichkeit und damit eine große Reichweite erzielt werden.

Die rotierende Optik ist teuer und erschütterungsempfindlich und verschleißbehaftet. Diese Nachteile sollen durch Solid State Scanner überwunden werden.

Die EP 2 910 970 A1 offenbart einen Solid State Laserscanner mit mindestens einem Sendeelement und mindestens einem Empfangselement und einer Steuer- und Auswerteeinheit zur Auswertung der Lichtlaufzeit von Lichtstrahlen vom Sendeelement über ein Objekt zum Empfangselement, eine Vielzahl von Sendeelementen und eine Vielzahl von Empfangselementen die kreisabschnittsförmig in einem gemeinsamen Gehäuse angeordnet sind, wobei die Lichtstrahlen in verschiedenen Winkelrichtungen fächerförmig ausgesendet und/oder empfangen werden, wobei sich die Abstände der ausgesendeten Lichtstrahlen der Sendeelemente mit größer werdendem Abstand zum Laserscanner vergrößern und/oder die Abstände der empfangenen Lichtstrahlen der Empfangselemente mit kleiner werdendem Abstand zum Laserscanner verkleinern.

Gemäß der EP 2 910 970 A1 wird statt einer rotierenden Optik pro Winkelinkrement ein Empfängerelement eingesetzt. Damit kann auch bei einer praktikabel kleinen Bauform des Gesamtgeräts eine brauchbare Winkelauflösung erzielt werden. Allerdings ist die bei hoher Winkelauflösung erreichbare Empfindlichkeit und damit Reichweite wesentlich geringer als bei konventionellen Scannern, weil die pro Winkelinkrement und Empfänger eingesetzte Optik, beispielsweise Sammellinse nur vergleichsweise sehr klein sein kann.

Eine Aufgabe der Erfindung besteht darin, einen Laserscanner ohne bewegliche Teile bereitzustellen, der eine hohe Winkelauflösung und gleichzeitig eine hohe Empfindlichkeit bzw. Reichweite aufweist.

Die Aufgabe wird gemäß Anspruch 1 gelöst durch einen Laserscanner mit einer Vielzahl von Sendeelementen und einer Vielzahl von Empfangselementen und einer Steuer- und Auswerteeinheit zur Auswertung der Lichtlaufzeit von Lichtstrahlen von den Sendeelementen über ein Objekt zu den Empfangselementen, wobei die Sendeelemente und die Empfangselemente bogenabschnittsförmig in einem gemeinsamen Gehäuse angeordnet sind, wobei die Lichtstrahlen in verschiedenen Winkelrichtungen fächerförmig ausgesendet und/oder empfangen werden, wobei vor jedem Empfangselement mindestens eine bogenabschnittsförmige Linse angeordnet ist, die sich über mehrere Empfangselemente erstreckt.

Somit ist also vor mehreren Empfangselementen mindestens eine gemeinsame bogenabschnittsförmige Linse angeordnet.

Die bogenabschnittsförmige Linse kann auch eine kreisabschnittsförmige Linse sein. Die kreisabschnittsförmige Linse kann auch als kreisringabschnittsförmige Linse bezeichnet werden.

Die bogenabschnittsförmige Linse kann auch eine gekrümmte Zylinderlinse sein. Dabei ist die Linse im Querschnitt optional als Sammellinse ausgebildet.

Die bogenabschnittsförmige Linse kann auch eine parabelförmige Krümmung aufweisen.

Gemäß der Erfindung ist die wirksame Linsenfläche pro Empfangselement größer als eine Linsenfläche einer Einzellinse pro Empfangselement.

Gegenüber einer Aneinanderreihung von konventionellen diskreten Einzellinsen bietet die bogenabschnittsförmige Linse eine kontinuierliche Linse zum Überwachungsbereich mit optimiertem Füllfaktor.

Dadurch, dass die bogenabschnittsförmige Linse in Bogenrichtung bzw. Kreisrichtung, hier als Z-Richtung definiert, ausgedehnt ist, kann eine höhere Empfindlichkeit und damit eine höhere Reichweite erzielt werden.

Gegenüber einer Aneinanderreihung von konventionellen Einzellinsen bietet die bogenabschnittsförmige Linse ein kontinuierliches Fenster in den Überwachungsraum mit optimalem Füllfaktor.

Die Abstände der ausgesendeten Lichtstrahlen der Sendeelemente vergrößern sich mit größer werdendem Abstand zum Laserscanner und/oder die Abstände der empfangenen Lichtstrahlen der Empfangselemente verkleinern sich mit kleiner werdendem Abstand zum Laserscanner.

Die optischen Achsen der ausgesendeten bzw. empfangenen Lichtstrahlen haben einen Ursprung im Gehäuse des Laserscanners, beispielsweise einen punktförmigen oder linienförmigen Ursprung im Gehäuse des Laserscanners. Auch die optischen Achsen der Sendeelemente bzw. Empfangselemente haben einen Ursprung, bzw. einen optionalen gemeinsamen punktförmigen oder linienförmigen Ursprung im Gehäuse des Laserscanners.

Die ausgesendeten Lichtstrahlen der Sendeelemente entfernen sich also beim Aussenden in Richtung der ausgesendeten Lichtstrahlen immer mehr voneinander. Die empfangenen Lichtstrahlen der Empfangselemente laufen fächerförmig zusammen, wobei sich die Abstände zwischen den Lichtstrahlen in Richtung der empfangenen Lichtstrahlen verkleinern.

Eine Frontscheibe des Laserscanners ist dabei in dem Gehäuse angeordnet. Die Frontscheibe bildet dabei eine konvexe Oberfläche an der Außenseite des Gehäuses. Die gesendeten Lichtstrahlen werden dabei fächerförmig auseinanderlaufend ausgesendet. Gemäß der Erfindung werden die Lichtstrahlen in verschiedenen Winkelrichtungen fächerförmig ausgesendet bzw. empfangen, wodurch ein Überwachungsbereich dahingehend einfach untersucht werden kann, ob Objekte in dem Überwachungsbereich vorhanden sind oder nicht und an welcher Stelle, d.h. in welcher Entfernung die Objekte vorhanden sind. Weiter können die Objekte vermessen werden, bzw. eine Umgebungskontur und deren Veränderung erfasst werden. Durch die fächerförmige Aussendung der Lichtstrahlen, bzw. das fächerförmige Empfangen wird der Überwachungsbereich innerhalb einer fächerförmigen Ebene überwacht. Die Sendeelemente bzw. Empfangselemente sind gemäß der Erfindung am Umfang eines Zylinders radialsymmetrisch angeordnet. Der Laserscanner kann mit einer hohen Winkelgenauigkeit hergestellt werden, da die Sendeelemente und Empfangselemente fest fixiert sind und die Lichtstrahlen direkt, ohne bewegliche Teile in den Überwachungsbereich gelangen. Bei der Produktion des Laserscanners kann die Winkelgenauigkeit der Winkelrichtungen geprüft und eingestellt werden. Dadurch ist gewährleistet, dass jeder Laserscanner eine bestimmte geforderte mindeste Winkelgenauigkeit einhält.

Der erfindungsgemäße Laserscanner ist daher einfach und preiswert aufgebaut. Da der Laserscanner ohne mechanisch bewegliche Teile auskommt, weist dieser keinen mechanischen Verschleiß auf und besitzt eine lange Lebensdauer. Beispielsweise kann eine geforderte Einsatzdauer von beispielsweise ca. 20 Jahren mit dem erfindungsgemäßen Laserscanner erfüllt werden.

Da der Laserscanner ohne bewegliche Teile auskommt, die beispielsweise beim Einsatz in Fahrzeugen Beschleunigungen ausgesetzt sein können, ist der erfindungsgemäße Laserscanner unempfindlicher gegen Schwing- und Schockbelastungen und kann daher problemlos in mechanisch bewegten Objekten wie Fahrzeugen insbesondere Flurförderfahrzeugen eingesetzt werden. Dadurch, dass der Laserscanner ohne bewegliche Teile auskommt, kann der Laserscanner auch sehr kompakt ausgeführt werden.

Die Sendeelemente und/oder die Empfangselemente werden zyklisch nacheinander aktiviert, wodurch der Überwachungsbereich zyklisch abgetastet werden kann. Dabei können auch mehrere Sendeelemente und/oder Empfangselemente gleichzeitig aktiviert werden, um beispielsweise den Überwachungsbereich parallel an zwei verschiedenen Stellen gleichzeitig abzutasten. So können beispielsweise entgegengesetzt oder um 90° versetzt angeordnete Sendeelemente und/oder Empfangselemente gleichzeitig aktiviert werden, da diese sich dann optisch nicht gegenseitig beeinflussen.

In Weiterbildung ist vor jedem Sendeelement und vor jedem Empfangselement mindestens eine bogenabschnittsförmige Linse angeordnet ist, die sich über mehrere Sendeelemente und mehrere Empfangselemente erstreckt.

Somit ist also vor mehreren Sendeelementen und vor mehreren Empfangselementen mindestens eine gemeinsame bogenabschnittsförmige Linse angeordnet.

Gemäß der Weiterbildung ist die wirksame Linsenfläche pro Sendeelement und/oder pro Empfangselement größer als eine Linsenfläche einer Einzellinse pro Sendeelement bzw. Empfangselement.

In Weiterbildung der Erfindung werden Sendeelemente simultan aktiviert. Insbesondere können benachbarte Sendeelemente simultan aktiviert werden. Dadurch kann die Sendeenergie erhöht werden, wodurch eine Erhöhung der Reichweite möglich ist. Vorzugsweise werden genau zwei benachbarte Sendelemente aktiviert. Jedoch kann es auch vorgesehen sein, dass mindestens zwei Sendeelemente, also auch drei, vier oder mehr benachbarte Sendeelemente simultan, also gleichzeitig aktiviert werden.

In Weiterbildung der Erfindung werden Empfangselemente simultan ausgewertet. Insbesondere können benachbarte Empfangselemente simultan ausgewertet werden. Dadurch kann eine Empfindlichkeit erhöht werden, wodurch eine Erhöhung der Reichweite möglich ist. Vorzugsweise werden genau zwei benachbarte Empfangselemente aktiviert und ausgewertet. Jedoch kann es auch vorgesehen sein, dass mindestens zwei Empfangselemente, also auch drei, vier oder mehr benachbarte Empfangselemente simultan, also gleichzeitig aktiviert und ausgewertet werden. Dabei kann das Ergebnis der simultan ausgewerteten Empfangselemente integriert bzw. summiert werden.

Gemäß der Weiterbildung ist es möglich, wenn ein ausreichend großer Winkelabstand zwischen Empfangselementen eingehalten wird, Empfangselemente ohne gegenseitige Beeinflussung gleichzeitig durch die Steuer- und Auswerteeinheit auszuwerten. Es kann dabei also jedes n-te Empfangselement gleichzeitig, also parallel ausgewertet werden und so eine Scanzeit erheblich reduziert werden. Dabei ist auch optional jedes n-te Sendeelement gleichzeitig, also parallel aktiviert, welches dem n-ten aktivierten Empfangselement zugeordnet ist.

Zusätzlich zur Addition der Signale benachbarter Empfangselemente können die Einzelbeiträge der Empfangselemente analysiert werden und dadurch rechnerisch eine feinere Auflösung der Winkelinformation erreicht werden.

In Weiterbildung der Erfindung liegen die optischen Achsen der Sendeelemente und/oder der Empfangselemente in einer gemeinsamen Ebene. Dadurch wird ein ebenes flächiges Schutzfeld gebildet.

Die optischen Achsen der Sendeelemente und/oder die optischen Achsen der Empfangselemente liegen dabei vorzugsweise in einer Ebene der optischen Achsen der Linse bzw. der Linsen.

In Weiterbildung der Erfindung beträgt der Kreisabschnitt der Linse mindestens 30°, mindestens 45°, mindestens 60°, mindestens 90°, mindestens 120°, mindestens 180°, mindestens 270° oder 360°.

Dadurch können gewünschte Flächenabschnitte oder gewünschte Raumabschnitte überwacht werden. Ein Überwachungsbereich mit einem Kreisabschnitt der Linse von mindestens 30° bis mindestens 60° ist beispielsweise sehr preiswert herstellbar. Ein Überwachungsbereich mit einem Kreisabschnitt der Linse von mindestens 90° ist beispielsweise von Vorteil, wenn der Laserscanner in einer 90°-Ecke angeordnet wird und so eine Überwachung des gesamten Raumbereiches möglich wird. Mit einem Überwachungsbereich mit einem Kreisabschnitt der Linse von mindestens 180° kann eine Montage des Laserscanners an einer Wand erfolgen und dennoch der gesamte Raumbereich überwacht werden. Mit einem Überwachungsbereich mit einem Kreisabschnitt der Linse von mindestens 270° kann eine Montage des Laserscanners beispielsweise an einer Ecke eines Fahrzeuges erfolgen, wobei ein Bereich von 270° um das Fahrzeug herum überwacht werden kann. Ein Überwachungsbereich mit einem Kreisabschnitt der Linse von 360° erlaubt eine komplette Rundumsicht um den Laserscanner, so dass beispielsweise ein Fahrzeug mit nur einem einzigen Laserscanner rundum abgesichert werden kann.

In Weiterbildung der Erfindung ist die Linse torusabschnittsförmig. Der Querschnitt der torusabschnittsförmigen Linse ist dabei vorzugsweise eine Sammellinse. Jedoch können auch mehrere torusabschnittsförmige Linsen hintereinander ein Objektiv bilden. Dadurch kann das Toruslinsensegment, das sich einem Sendelement oder einem Empfangselement zuordnen lässt, eine wesentlich größere Linsenfläche haben, als eine runde Einzellinse für ein einzelnes Sende- oder Empfangselement. Zudem können bei der Auswertung des remittierten Lichts für ein bestimmtes Winkelinkrement gleichzeitig auch die von Empfangselementen benachbarter Winkelinkremente empfangenen Intensitäten ausgewertet und addiert werden.

Abschnitte von bogenabschnittsförmigen Toruslinsen können auch von Kreisbögen abweichende Krümmungen aufweisen und beispielsweise parabelförmig gekrümmt sein.

Ein Krümmungsmittelpunkt eines Toruslinsenabschnitts muss nicht mit dem Mittelpunkt eines Kreissegments zusammenfallen, auf dem beispielsweise die Empfangselemente angeordnet sind. Insbesondere kann der Toruslinsenabschnitt stärker gekrümmt sein als das die Empfangselemente tragende Kreissegment. So ist eine erhöhte Empfindlichkeit in der Mitte des Überwachungsbereichs auf Kosten einer reduzierten Empfindlichkeit in den Seitenbereichen realisierbar.

In Weiterbildung der Erfindung ist die Linse kugelteilabschnittsförmig mit einem Radius r. Im Zentrum der kugelabschnittsförmigen Linse ist ein Radius r' = f - r angeordnet, so dass an dem Radius r' eine zu einem Kreisabschnitt gebogene Anordnung von Empfangselementen oder Sendeelementen angeordnet werden kann.

In Weiterbildung der Erfindung ist die Linse kugelschalenteilabschnittsförmig mit einem Radius r.

Beispielsweise ist die Linse aus Glas, Silizium oder Kunststoff. Wenn die Linse aus Silizium hergestellt ist, kann diese zugleich die Empfangselemente aufweisen bzw. bilden, indem an der Innenseite der Linse die Empfangselemente eindiffundiert werden.

In Weiterbildung der Erfindung weist das Material der Linse einen Brechungsindex n' > 1 auf, wobei eine Brennweite f der Linse kleiner dem Radius r der Linse ist.

Es wird dabei eine Linse eingesetzt, deren Brechungsindex bei einer verwendeten Wellenlänge, üblicherweise nahes Infrarotlicht, eine Brennweite ergibt, die kleiner ist als der Radius r der Linse.

Mit hochbrechenden Gläsern oder Kunststoffen kann f < r erreicht werden. Es ist aber auch eine Kombination von mehreren kugelteilabschnittsförmigen oder kugelschalenteilabschnittsförmigen Linsen möglich. Die Linsen können dabei aus Materialen mit unterschiedlichen Brechungsindizes hergestellt sein.

Die Brennweite beträgt beispielsweise f = r/(n'-1), wobei n' der Brechungsindex der Linse ist. Mit einem Brechungsindex von beispielsweise ca. 3,7 bei 850 nm Wellenlänge des verwendeten Lichts beträgt die Brennweite f = 0,37 ^{∗} r. Mit einem Brechungsindex von beispielsweise ca. 2,1 bei 850 nm Wellenlänge des verwendeten Lichts beträgt die Brennweite f = 0,9 ^{∗} r.

In Weiterbildung der Erfindung sind die Empfangselemente von Photoempfängern als Zeilenelemente gebildet. Dadurch können die Empfangselemente sehr dicht nebeneinander angeordnet werden, wodurch eine hohe Auflösung erreichbar ist.

In Weiterbildung der Erfindung sind die Sendeelemente und/oder die Empfangselemente bogenabschnittsförmig oder kreisabschnittsförmig äquidistant angeordnet. Dadurch wird eine gleichmäßige Auflösung des Laserscanners erreicht.

In Weiterbildung der Erfindung sind die Sendeelemente und/oder die Empfangselemente in einer Matrix mit mindestens zwei Reihen angeordnet. Dadurch sind mehrere Ebenen von Schutzfeldern realisierbar. Beispielsweise ist jeder Reihe eine bogenabschnittsförmige Linse zugeordnet.

Dadurch wird der bisher fächerförmig in einer Ebene überwachte Überwachungsbereich in einer weiteren Dimension erweitert, so dass gemäß der Weiterbildung der Erfindung ein teilzylindrischer Überwachungsbereich überwacht werden kann. Gemäß der Weiterbildung kann es dabei vorgesehen sein, dass Sendeelemente und Empfangselemente alternierend angeordnet sind. Dadurch ist immer ein Sendeelement benachbart zu einem Empfangselement angeordnet. Beispielsweise werden die Sendelemente in einer ersten Zeile angeordnet und die Empfangselemente in einer parallel benachbarten Zeile. Anschließend an die Zeile mit den Empfangselementen erfolgt wieder parallel eine Zeile mit Sendeelementen und parallel eine Zeile mit Empfangselementen. Dieser Aufbau kann zur Vergrößerung des Überwachungsbereichs erweitert werden.

In Weiterbildung der Erfindung sind die Sendeelemente und/oder die Empfangselemente in einem Vollkreis angeordnet.

Dadurch ist ein ringförmiger oder auch ein hohlzylindrischer Überwachungsbereich realisierbar. Vorteilhaft wird dadurch ein Schutzfeld mit einer Winkelausdehnung von 360° realisiert. Die Lichtstrahlen werden dabei in einem Winkelbereich von 360° von den Sendeelementen ausgesendet und in einem Winkelbereich von 360° von den Empfangselementen empfangen. Beispielsweise ist eine einzige Zeile mit Zeilenelementen in einem 360° Vollkreis angeordnet. Dabei ist das Substrat der Zeile so dünn ausgeführt, dass sich das Zeilenelement einer Krümmung des Vollkreises anpassen kann

In Weiterbildung der Erfindung sind die Sendeelemente und/oder die Empfangselemente auf einer flexiblen Leiterplatte angeordnet.

Dadurch lässt sich der Laserscanner sehr preiswert herstellen. Die flexible Leiterplatte wird in einem ersten Arbeitsschritt mit den Sendeelementen und/oder mit den Empfangselementen bestückt. Anschließend wird die flexible Leiterplatte auf einem Teilkreiszylinder oder einem Zylinder montiert, so dass die Sendeelemente und/oder Empfangselemente kreisabschnittsförmig oder teilkreisförmig angeordnet sind.

In Weiterbildung sind die Sendeelemente und/oder die Empfangselemente teilkreisförmig, kreisabschnittsförmig, kreisförmig, teilzylinderförmig, zylinderförmig, teilkugelförmig, kugelabschnittsförmig oder kugelförmig angeordnet.

Beispielsweise sind die Sendeelemente und/oder die Empfangselemente auf einem starren Kunststoffträger angeordnet. Bei dem starren Kunststoffträger handelt es sich beispielsweise um eine dreidimensionale starre Leiterplatte, welche direkt mit den Sendeelementen oder den Empfangselementen bestückt wird. Beispielsweise kann der Kunststoffträger als hochintegriertes MID-Teil (Molded Interconnected Device bzw. spritzgegossener Schaltungsträger) hergestellt sein. Als Molded Interconnect Devices, kurz MID, werden elektronische Bauteile bezeichnet, bei denen metallische Leiterbahnen auf und innerhalb spritzgegossener Kunststoffträger integriert werden.

In Weiterbildung der Erfindung ist pro Winkelgrad mindestens ein Sendeelement und/oder mindestens ein Empfangselement angeordnet.

Dadurch ist pro Winkelgrad mindestens ein Entfernungsmesswert verfügbar. Bei der Verwendung von mehr als einem Sendeelement und/oder Empfangselement pro Winkelgrad wird die Auflösung weiter erhöht. Bei beispielsweise einer Pixelbreite von 20 µm und einem Zylinderradius von 30 mm kann so eine Winkelauflösung von 0,38° erreicht werden.

In Weiterbildung der Erfindung ist die Steuer- und Auswerteeinheit von einem Logikbaustein, insbesondere vom Typ CPLD (Complex Programmable Logic Device) oder FPGA (Field Programmable Gate Array) gebildet.

Die Sendeelemente werden von der Steuer- und Auswerteeinheit angesteuert. Dabei kann es sich insbesondere um einen Logikbaustein, insbesondere vom Typ CPLD (Complex Programmable Logic Device) oder FPGA (Field Programmable Gate Array) handeln. Die Steuer- und Auswerteeinheit kann auch durch einen DSP (Digitalen Signal Prozessor) gebildet sein. Zur Reduktion der gegenseitigen Beeinflussung der Empfangselemente erfolgt die Steuerung der Sendeelemente segmentiert und/oder sequentiell. Das zum Sendeelement zugehörige Empfangselement wird dabei synchron ausgewertet.

Weiter werden die Empfangselemente von der Steuer- und Auswerteeinheit ausgewertet. Gemäß der Erfindung kann jedoch auch für die Sendeelemente und für die Empfangselemente eine getrennte Steuereinheit und eine getrennte Auswerteeinheit vorgesehen werden, die über eine Schnittstelle miteinander verbunden sind.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1 bis Figur 3: jeweils einen erfindungsgemäßen Laserscanner;
- Figur 4: eine 90° bogenabschnittsförmige Linse;
- Figur 5: eine 180° bogenabschnittsförmige Linse;
- Figur 6: eine 270° bogenabschnittsförmige Linse;
- Figur 7: eine 360° bogenabschnittsförmige Linse;
- Figur 8: eine 90° bogenabschnittsförmige Linse;
- Figur 9: eine 180° bogenabschnittsförmige Linse;
- Figur 10: eine 270° bogenabschnittsförmige Linse;
- Figur 11: eine 360° bogenabschnittsförmige Linse;
- Figur 12: einen Laserscanner mit einem 360° Scanbereich;
- Figur 13: einen Laserscanner mit einem Scanbereich von ca. 180°;
- Figur 14 und 15: eine schematische Darstellung eines Laserscanners mit einem Scanbereich von 90°;
- Figur 16 und 17: eine schematische Darstellung eines Laserscanners mit kreiszylindrischem Scanbereich von 360°;
- Figur 18: eine schematische Darstellung eines Laserscanners mit kreiszylindrischen Scanbereich von 360°;
- Figur 19: eine schematische Darstellung eines Laserscanners mit einem kugelförmigen Scanbereich;
- Figur 20: einen Laserscanner mit einem 360° Scanbereich.

In den nachfolgenden schematischen Figuren sind identische Teile mit identischen Bezugszeichen versehen.

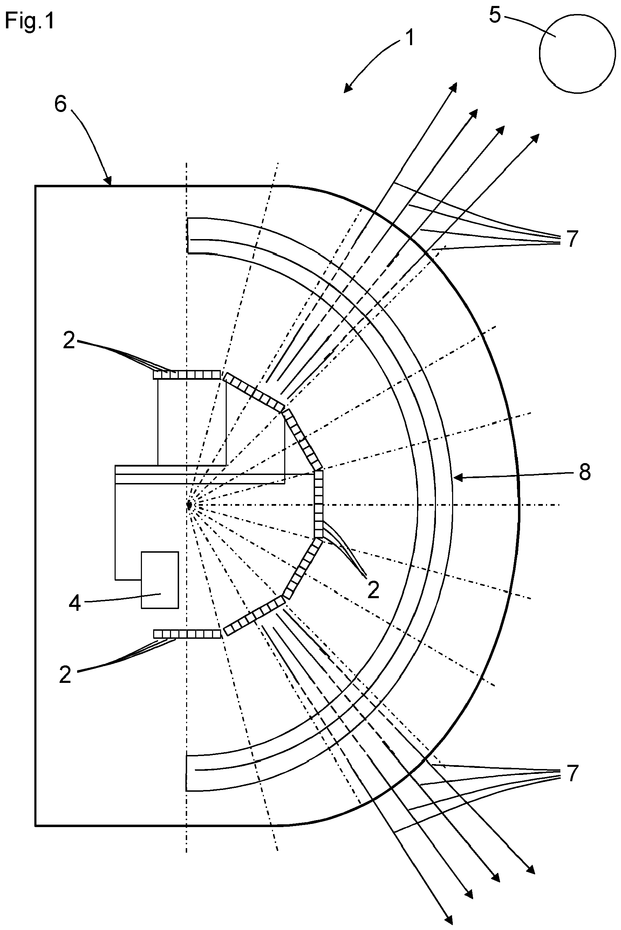

Figur 1 bis Figur 3 zeigen schematisch einen Laserscanner 1 mit einer Vielzahl von Sendeelementen 2 und einer Vielzahl von Empfangselementen 3 und einer Steuer- und Auswerteeinheit 4 zur Auswertung der Lichtlaufzeit von Lichtstrahlen 7 von den Sendeelementen 2 über ein Objekt 5 zu den Empfangselementen 3, wobei die Sendeelemente 2 und die Empfangselemente 3 bogenabschnittsförmig in einem gemeinsamen Gehäuse 6 angeordnet sind, wobei die Lichtstrahlen in verschiedenen Winkelrichtungen fächerförmig in einen Überwachungsbereich ausgesendet und/oder empfangen werden, wobei vor jedem Sendeelement 2 und/oder vor jedem Empfangselement 3 mindestens eine bogenabschnittsförmige Linse 8 angeordnet ist, die sich über mehrere Sendeelemente 2 und/oder mehrere Empfangselemente 3 erstreckt.

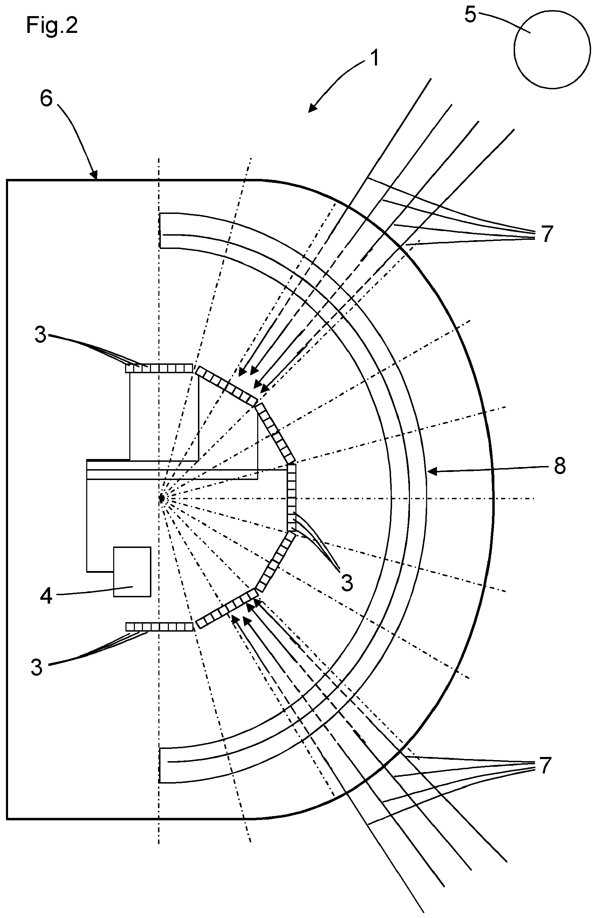

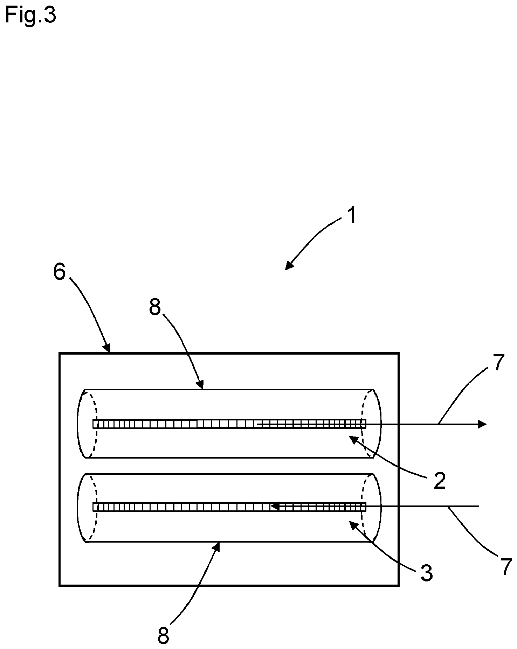

Figur 1 zeigt den Teil des Laserscanners 1 mit den Sendeelementen 2. Figur 2 zeigt den Teil des Laserscanners 1 mit den Empfangselementen 3. Figur 3 zeigt die übereinander angeordneten Sendeelemente 2 und Empfangselemente 3 gemäß Figur 1 und Figur 2.

Die bogenabschnittsförmige Linse 8 kann auch eine kreisabschnittsförmige Linse 8 sein. Die kreisabschnittsförmige Linse 8 kann auch als kreisringabschnittsförmige Linse 8 bezeichnet werden.
Die bogenabschnittsförmige Linse 8 kann auch eine gekrümmte Zylinderlinse sein. Dabei ist die Linse 8 im Querschnitt optional als Sammellinse ausgebildet.

Die bogenabschnittsförmige Linse 8 kann auch eine parabelförmige Krümmung aufweisen.

Die wirksame Linsenfläche pro Sendeelement 2 und/oder pro Empfangselement 3 ist größer als eine Linsenfläche einer Einzellinse pro Sendeelement 2 bzw. Empfangselement 3.

Gegenüber einer Aneinanderreihung von konventionellen Einzellinsen bietet die bogenabschnittsförmige Linse 8 ein kontinuierliches Fenster in den Überwachungsbereich mit optimalem Füllfaktor.

Die Abstände der ausgesendeten Lichtstrahlen 7 der Sendeelemente 2 vergrößern sich gemäß Figur 1 mit größer werdendem Abstand zum Laserscanner 1 und/oder die Abstände der empfangenen Lichtstrahlen 7 der Empfangselemente 3 verkleinern sich mit kleiner werdendem Abstand zum Laserscanner 1.

Die optischen Achsen der ausgesendeten bzw. empfangenen Lichtstrahlen 7 haben einen Ursprung im Gehäuse 6 des Laserscanners 1, beispielsweise einen punktförmigen Ursprung im Gehäuse des Laserscanners 1. Auch die optischen Achsen der Sendeelemente 2 bzw. Empfangselemente 3 haben einen Ursprung, bzw. einen optionalen gemeinsamen punktförmigen Ursprung im Gehäuse 6 des Laserscanners 1.

Die ausgesendeten Lichtstrahlen 7 der Sendeelemente 1 entfernen sich also beim Aussenden in Richtung der ausgesendeten Lichtstrahlen immer mehr voneinander. Die empfangenen Lichtstrahlen 7 der Empfangselemente gemäß Figur 2 laufen fächerförmig zusammen, wobei sich die Abstände zwischen den Lichtstrahlen 7 in Richtung der empfangenen Lichtstrahlen 7 verkleinern.

Eine Frontscheibe des Laserscanners 1 ist dabei in dem Gehäuse 6 angeordnet. Die Frontscheibe bildet dabei eine konvexe Oberfläche an der Außenseite des Gehäuses 6. Die gesendeten Lichtstrahlen 7 werden dabei fächerförmig auseinanderlaufend ausgesendet.

Gemäß Figur 1 bis 3 werden die Lichtstrahlen 7 in verschiedenen Winkelrichtungen fächerförmig ausgesendet bzw. empfangen, wodurch ein Überwachungsbereich dahingehend einfach untersucht werden kann, ob Objekte 5 in dem Überwachungsbereich vorhanden sind oder nicht und an welcher Stelle, d. h. in welcher Entfernung die Objekte 5 vorhanden sind. Die Sendeelemente 2 bzw. Empfangselemente 3 sind optional im Umfang eines Zylinders radialsymmetrisch angeordnet.

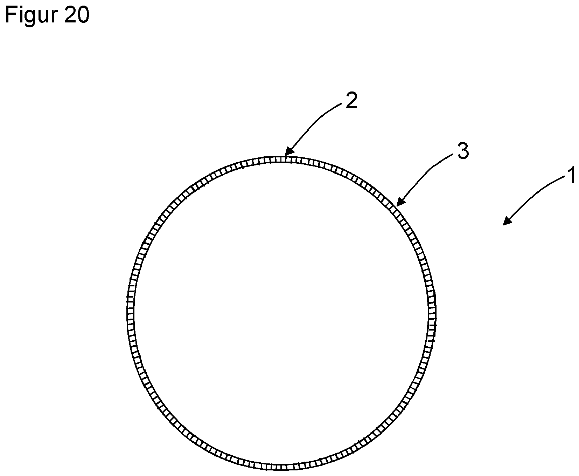

Die Sendeelemente 2 und/oder die Empfangselemente 3 werden zyklisch nacheinander aktiviert, wodurch der Überwachungsbereich zyklisch abgetastet werden kann. Dabei können auch mehrere Sendeelemente 2 und/oder Empfangselemente 3 gleichzeitig aktiviert werden, um beispielsweise den Überwachungsbereich parallel an zwei verschiedenen Stellen gleichzeitig abzutasten. So können beispielsweise entgegengesetzt oder um 90° versetzt angeordnete Sendeelemente 2 und/oder Empfangselemente 3 gemäß Figur 20 gleichzeitig aktiviert werden, da diese sich dann optisch nicht gegenseitig beeinflussen.

Beispielsweise werden gemäß Figur 1 benachbarte Sendeelemente 2 simultan aktiviert. Dadurch kann die Sendeenergie erhöht werden, wodurch eine Erhöhung der Reichweite möglich ist. Vorzugsweise werden genau zwei benachbarte Sendelemente 2 aktiviert. Jedoch kann es auch vorgesehen sein, dass mindestens zwei Sendeelemente 2, also auch drei, vier oder mehr benachbarte Sendeelemente 2 simultan, also gleichzeitig aktiviert werden.

Beispielsweise werden gemäß Figur 2 benachbarte Empfangselemente 3 simultan ausgewertet. Dadurch kann eine Empfindlichkeit erhöht werden, wodurch eine Erhöhung der Reichweite möglich ist. Vorzugsweise werden genau zwei benachbarte Empfangselemente 3 aktiviert und ausgewertet. Jedoch kann es auch vorgesehen sein, dass mindestens zwei Empfangselemente 3, also auch drei, vier oder mehr benachbarte Empfangselemente 3 simultan, also gleichzeitig aktiviert und ausgewertet werden.

Zusätzlich zur Addition der Signale benachbarter Empfangselemente 3 können die Einzelbeiträge der Empfangselemente 3 analysiert werden und dadurch rechnerisch eine feinere Auflösung der Winkelinformation erreicht werden.

Gemäß Figur 1 bis Figur 3 liegen die optischen Achsen der Sendeelemente 2 und/oder der Empfangselemente 3 in einer gemeinsamen Ebene. Dadurch wird ein ebenes flächiges Schutzfeld gebildet.

Die optischen Achsen der Sendeelemente 2 und/oder die optischen Achsen der Empfangselemente 3 liegen dabei vorzugsweise in einer Ebene der optischen Achsen der Linse 8 bzw. der Linsen 8.

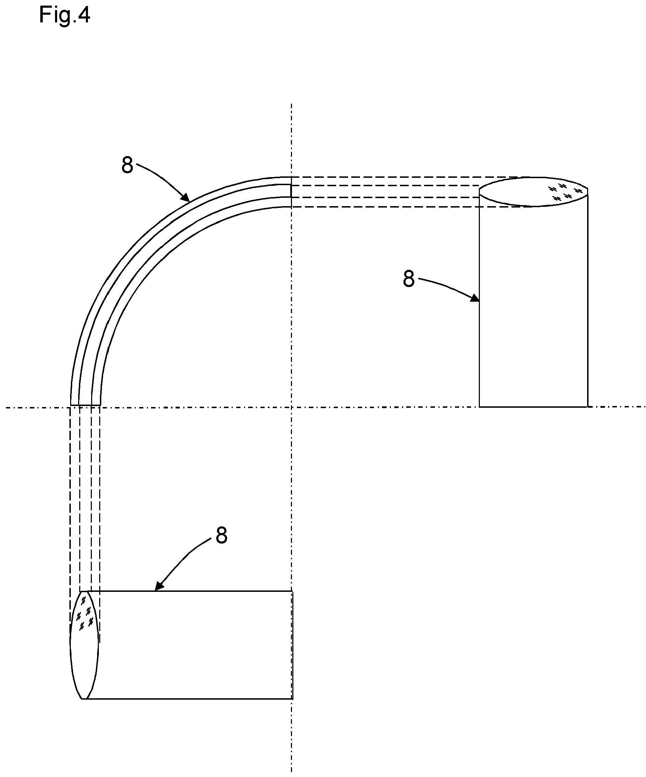

Figur 4 zeigt eine bogenabschnittsförmige bzw. kreisabschnittsförmige Linse 8 mit einem Kreisabschnitt von 90°. Die bogenabschnittsförmige Linse 8 ist in einer Draufsicht und zwei Seitenansichten dargestellt. Die Linse 8 weist einen Querschnitt einer Sammellinse auf. Die gestrichelten Linien sind lediglich als Hilfslinien zwischen den Ansichten dargestellt. Gemäß Figur 4 können auch andere Kreisabschnitte beispielsweise von 30°, 45° oder 60° vorgesehen sein.

Dadurch können gewünschte Flächenabschnitte oder gewünschte Raumabschnitte überwacht werden. Ein Überwachungsbereich mit einem Kreisabschnitt der Linse 8 von mindestens 30° bis mindestens 60° ist beispielsweise sehr preiswert herstellbar.

Ein Überwachungsbereich mit einem Kreisabschnitt der Linse 8 von mindestens 90° ist beispielsweise von Vorteil, wenn der Laserscanner 1 in einer 90°-Ecke angeordnet wird und so eine Überwachung des gesamten Raumbereiches möglich wird.

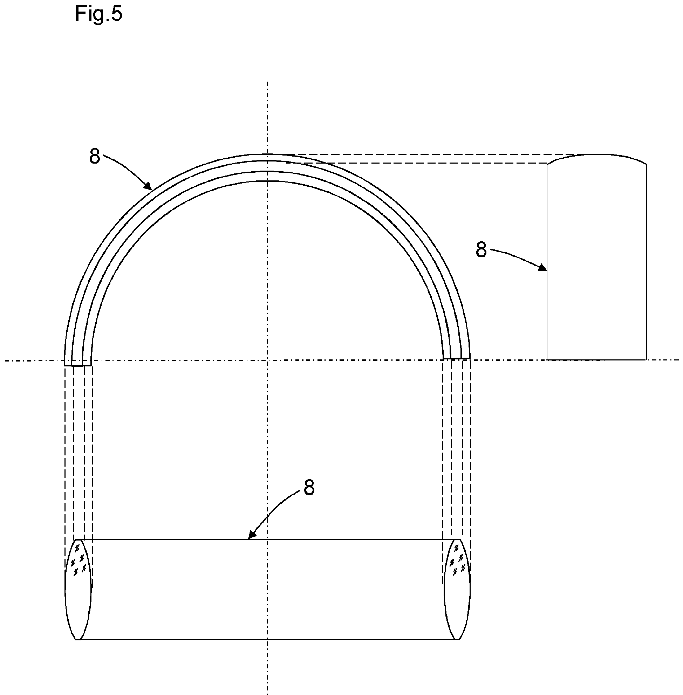

Figur 5 zeigt eine bogenabschnittsförmige bzw. kreisabschnittsförmige Linse 8 mit einem Kreisabschnitt von 180°. Die bogenabschnittsförmige Linse 8 ist in einer Draufsicht und zwei Seitenansichten dargestellt. Die Linse 8 weist einen Querschnitt einer Sammellinse auf. Die gestrichelten Linien sind lediglich als Hilfslinien zwischen den Ansichten dargestellt. Gemäß Figur 5 können auch andere Kreisabschnitte beispielsweise von 120° oder 150° vorgesehen sein.

Mit einem Überwachungsbereich mit einem Kreisabschnitt der Linse 8 von mindestens 180° kann eine Montage des Laserscanners 1 an einer Wand erfolgen und dennoch der gesamte Raumbereich überwacht werden.

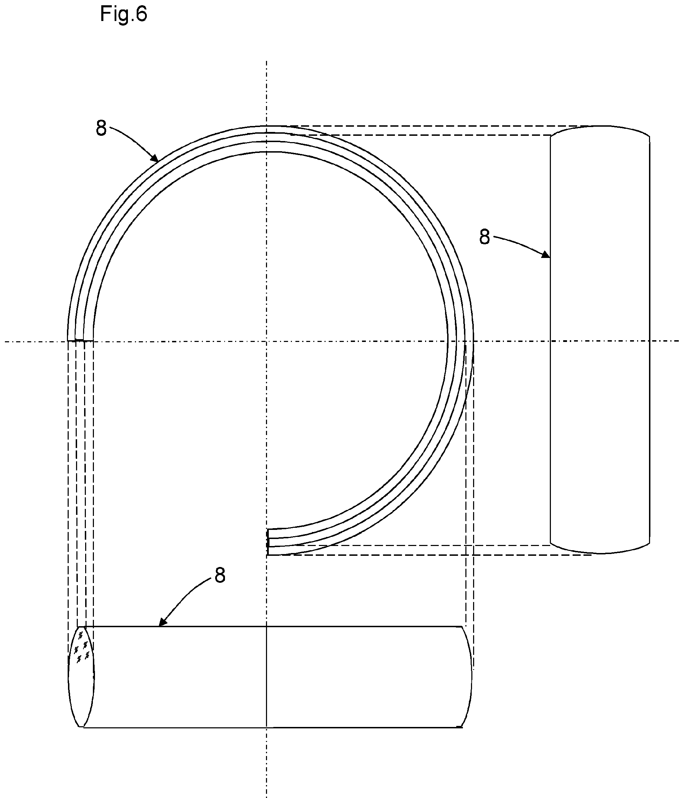

Figur 6 zeigt eine bogenabschnittsförmige bzw. kreisabschnittsförmige Linse 8 mit einem Kreisabschnitt von 270°. Die bogenabschnittsförmige Linse 8 ist in einer Draufsicht und zwei Seitenansichten dargestellt. Die Linse 8 weist einen Querschnitt einer Sammellinse auf. Die gestrichelten Linien sind lediglich als Hilfslinien zwischen den Ansichten dargestellt.

Mit einem Überwachungsbereich mit einem Kreisabschnitt der Linse 8 von mindestens 270° kann eine Montage des Laserscanners 1 beispielsweise an einer Ecke eines Fahrzeuges erfolgen, wobei ein Bereich von 270° um das Fahrzeug herum überwacht werden kann.

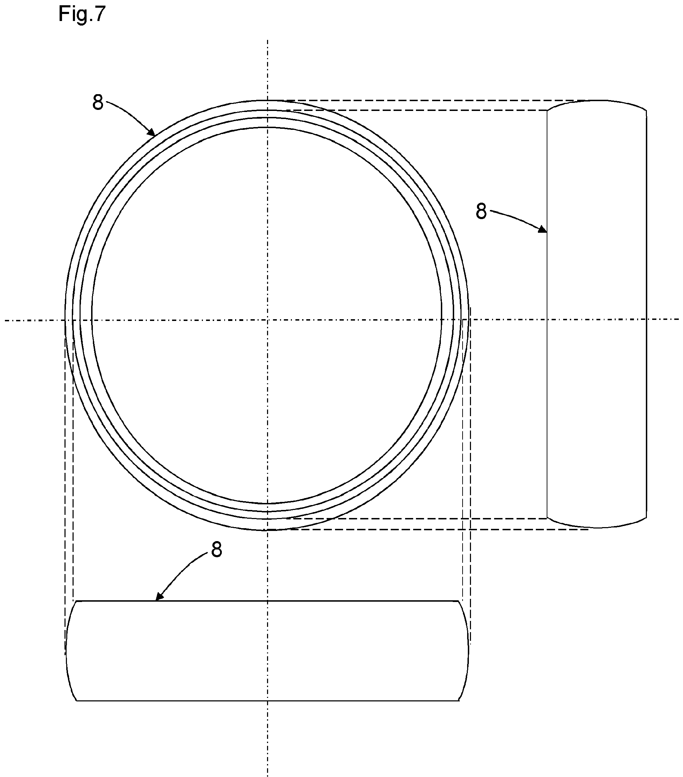

Figur 7 zeigt eine bogenabschnittsförmige bzw. kreisabschnittsförmige Linse 8 mit einem Kreisabschnitt von 360°. Die bogenabschnittsförmige Linse 8 ist in einer Draufsicht und zwei Seitenansichten dargestellt. Die Linse 8 weist einen Querschnitt einer Sammellinse auf. Die gestrichelten Linien sind lediglich als Hilfslinien zwischen den Ansichten dargestellt.

Ein Überwachungsbereich mit einem Kreisabschnitt der Linse 8 von 360° erlaubt eine komplette Rundumsicht um den Laserscanner 1, so dass beispielsweise ein Fahrzeug mit nur einem einzigen Laserscanner 1 rundum abgesichert werden kann.

Gemäß Figur 4 bis Figur 7 ist die Linse 8 torusabschnittsförmig. Der Querschnitt der torusabschnittsförmigen 8 Linse ist dabei vorzugsweise eine Sammellinse. Jedoch können auch mehrere torusabschnittsförmige Linsen 8 hintereinander ein Objektiv bilden. Dadurch kann das Toruslinsensegment, das sich einem Sendelement 2 oder einem Empfangselement 3 zuordnen lässt, eine wesentlich größere Linsenfläche haben als eine runde Einzellinse für ein einzelnes Sendeelement 2 oder Empfangselement 3. Zudem können bei der Auswertung des remittierten Lichts für ein bestimmtes Winkelinkrement gleichzeitig auch die von Empfangselementen 3 benachbarter Winkelinkremente empfangenen Intensitäten ausgewertet und addiert werden.

Abschnitte von bogenabschnittsförmigen Toruslinsen können auch von Kreisbögen abweichende Krümmungen aufweisen und beispielsweise parabelförmig gekrümmt sein.

Ein Krümmungsmittelpunkt eines Toruslinsenabschnitts muss nicht mit dem Mittelpunkt eines Kreissegments zusammenfallen auf dem beispielsweise die Empfangselemente 3 angeordnet sind. Insbesondere kann der Toruslinsenabschnitt stärker gekrümmt sein als das die Empfangselemente 3 tragende Kreissegment. So ist eine erhöhte Empfindlichkeit in der Mitte des Überwachungsbereichs auf Kosten einer reduzierten Empfindlichkeit in den Seitenbereichen realisierbar.

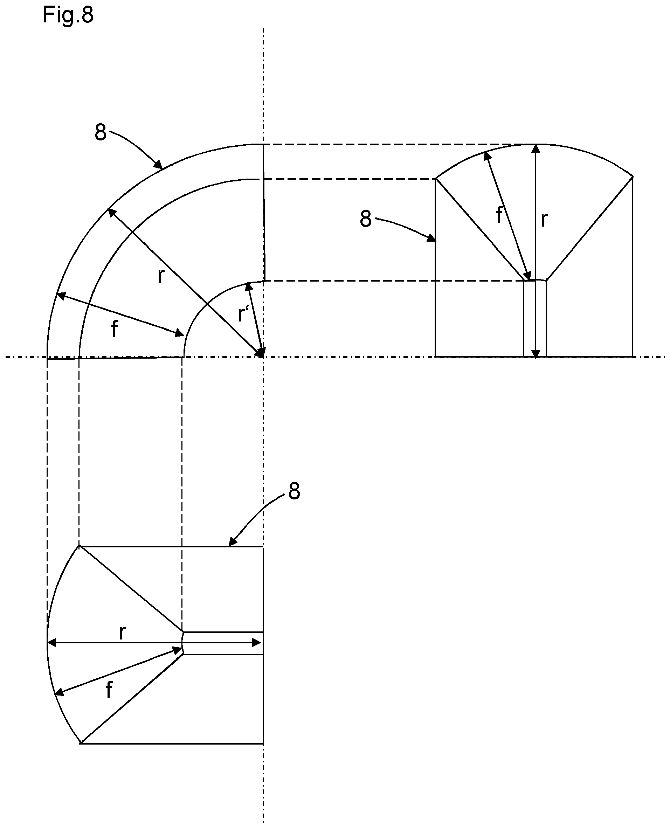

Figur 8 zeigt eine bogenabschnittsförmige bzw. kreisabschnittsförmige Linse 8 mit einem Kreisabschnitt von 90°. Die bogenabschnittsförmige Linse 8 ist in einer Draufsicht und zwei Seitenansichten dargestellt. Die gestrichelten Linien sind lediglich als Hilfslinien zwischen den Ansichten dargestellt. Gemäß Figur 8 können auch andere Kreisabschnitte beispielsweise von 30°, 45° oder 60° vorgesehen sein.

Gemäß Figur 8 ist die Linse 8 kugelteilabschnittsförmig mit einem Radius r. Im Zentrum der kugelabschnittsförmigen Linse ist ein Radius r' = f - r angeordnet, so dass an dem Radius r' eine zu einem Kreisabschnitt gebogene Anordnung von Empfangselementen 3 oder Sendeelementen 2 angeordnet werden kann.

Optional ist die Linse 8 kugelschalenteilabschnittsförmig mit einem Radius r.

Beispielsweise ist die Linse 8 aus Glas, Silizium oder Kunststoff.

Gemäß Figur 8 weist das Material der Linse 8 einen Brechungsindex n > 1 auf, wobei eine Brennweite f der Linse kleiner dem Radius r der Linse ist.

Es wird dabei eine Linse 8 eingesetzt, deren Brechungsindex bei einer verwendeten Wellenlänge, üblicherweise nahes Infrarotlicht, eine Brennweite f ergibt, die kleiner ist als der Radius r der Linse 8.

Mit hochbrechenden Gläsern oder Kunststoffen kann f < r erreicht werden. Es ist aber auch eine Kombination von mehreren kugelteilabschnittsförmigen oder kugelschalenteilabschnittsförmigen Linsen 8 möglich. Die Linsen 8 können dabei aus Materialen mit unterschiedlichen Brechungsindizes hergestellt sein.

Die Brennweite beträgt beispielsweise f = r/(n'-1), wobei n' der Brechungsindex der Linse 8 ist. Mit einem Brechungsindex von beispielsweise ca. 3,7 bei 850 nm Wellenlänge des verwendeten Lichts beträgt die Brennweite f = 0,37 ^{∗} r. Mit einem Brechungsindex von beispielsweise ca. 2,1 bei 850 nm Wellenlänge des verwendeten Lichts beträgt die Brennweite f = 0,9 ^{∗} r.

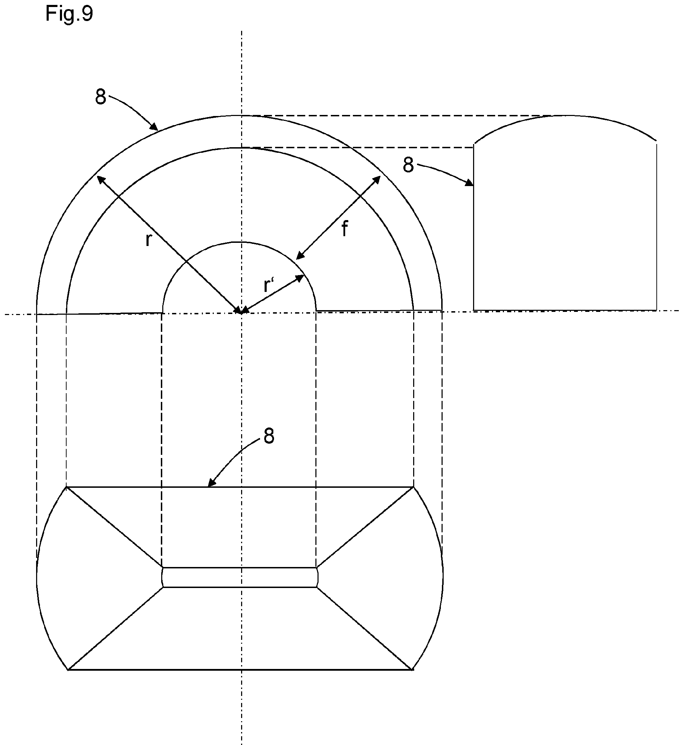

Figur 9 zeigt eine bogenabschnittsförmige bzw. kreisabschnittsförmige Linse 8 mit einem Kreisabschnitt von 180°. Die bogenabschnittsförmige Linse 8 ist in einer Draufsicht und zwei Seitenansichten dargestellt. Die gestrichelten Linien sind lediglich als Hilfslinien zwischen den Ansichten dargestellt. Gemäß Figur 8 können auch andere Kreisabschnitte vorgesehen sein. Gemäß Figur 9 ist die Linse 8 kugelteilabschnittsförmig mit einem Radius r.

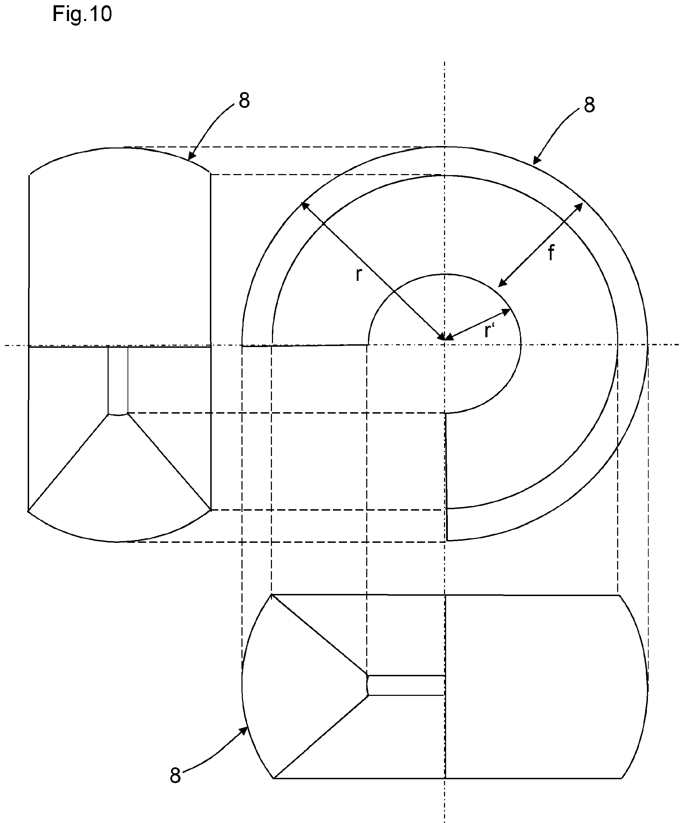

Figur 10 zeigt eine bogenabschnittsförmige bzw. kreisabschnittsförmige Linse 8 mit einem Kreisabschnitt von 270°. Die bogenabschnittsförmige Linse 8 ist in einer Draufsicht und zwei Seitenansichten dargestellt. Die gestrichelten Linien sind lediglich als Hilfslinien zwischen den Ansichten dargestellt. Gemäß Figur 10 können auch andere Kreisabschnitte vorgesehen sein. Gemäß Figur 10 ist die Linse 8 kugelteilabschnittsförmig mit einem Radius r.

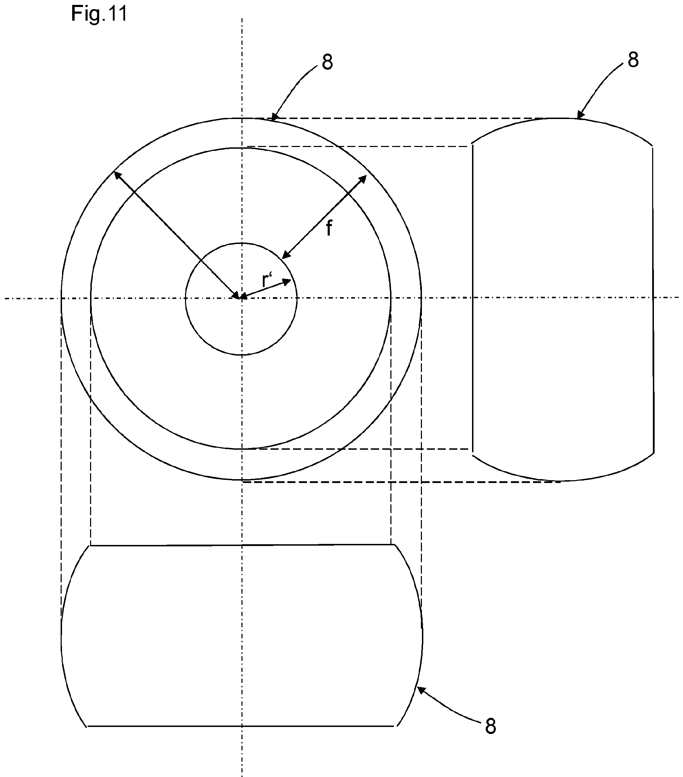

Figur 11 zeigt eine bogenabschnittsförmige bzw. kreisabschnittsförmige Linse 8 mit einem Kreisabschnitt von 360°. Die bogenabschnittsförmige Linse 8 ist in einer Draufsicht und zwei Seitenansichten dargestellt. Die gestrichelten Linien sind lediglich als Hilfslinien zwischen den Ansichten dargestellt. Gemäß Figur 11 ist die Linse 8 kugelteilabschnittsförmig mit einem Radius r.

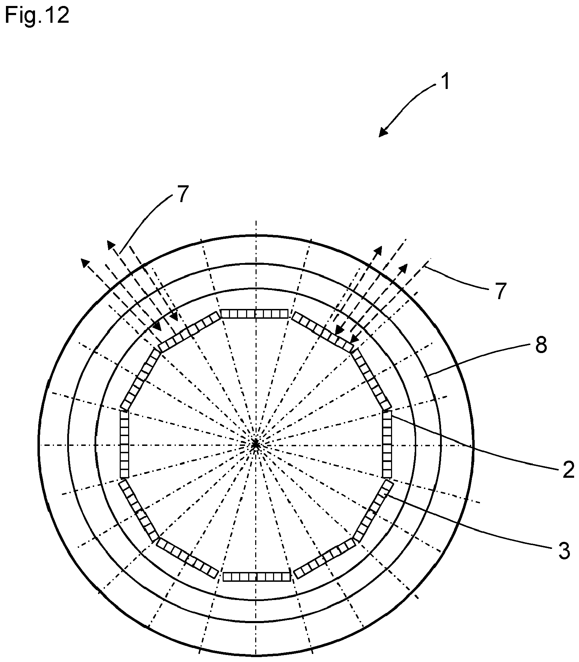

Figur 12 zeigt einen Laserscanner 1 mit einem 360° Scanbereich mit einer Linse 8.

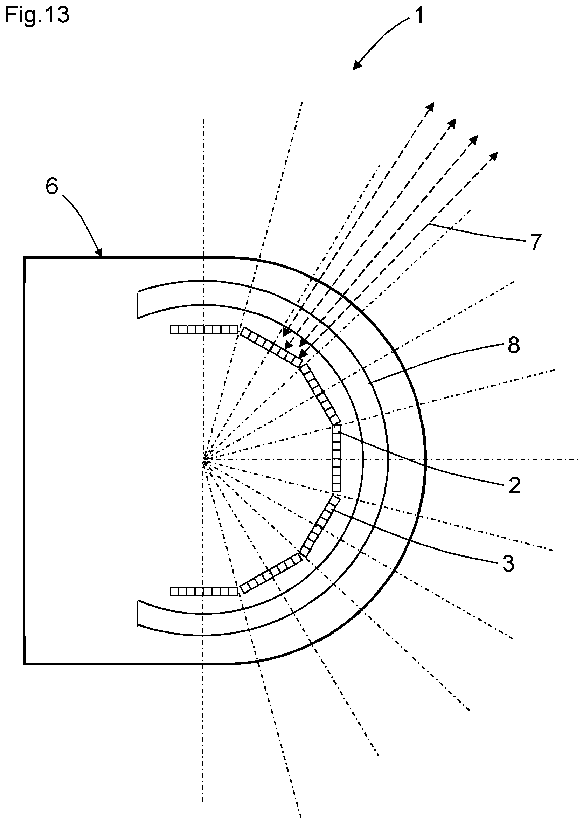

Figur 13 einen Laserscanner 1 mit einem Scanbereich von ca. 180° mit einer Linse 8.

Gemäß Figur 12 und Figur 13 sind die Empfangselemente 3 von Photoempfängern als Zeilenelemente gebildet. Dadurch können die Empfangselemente 3 sehr dicht nebeneinander angeordnet werden, wodurch eine hohe Auflösung erreichbar ist.

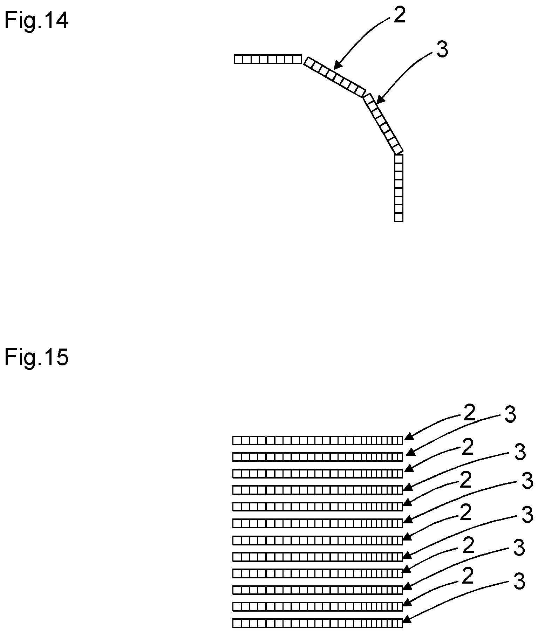

Gemäß Figur 14 sind die Sendeelemente 2 und/oder die Empfangselemente 3 bogenabschnittsförmig oder kreisabschnittsförmig äquidistant angeordnet. Dadurch wird eine gleichmäßige Auflösung des Laserscanners 1 erreicht.

Gemäß Figur 15 sind die Sendeelemente 2 und/oder die Empfangselemente 3 in einer Matrix mit mindestens zwei Reihen angeordnet sind. Dadurch sind mehrere Ebenen von Schutzfeldern realisierbar. Beispielsweise ist jeder Reihe eine bogenabschnittsförmige Linse 8 zugeordnet.

Dadurch wird der bisher fächerförmig in einer Ebene überwachte Überwachungsbereich in einer weiteren Dimension erweitert, so dass ein teilzylindrischer Überwachungsbereich überwacht werden kann. Dabei kann es vorgesehen sein, dass Sendeelemente 2 und Empfangselemente 3 alternierend angeordnet sind. Dadurch ist immer ein Sendeelement 2 benachbart zu einem Empfangselement 3 angeordnet. Beispielsweise werden die Sendelemente 2 in einer ersten Zeile angeordnet und die Empfangselemente 3 in einer parallel benachbarten Zeile. Anschließend an die Zeile mit den Empfangselementen 3 erfolgt wieder parallel eine Zeile mit Sendeelementen 2 und parallel eine Zeile mit Empfangselementen 3. Dieser Aufbau kann zur Vergrößerung des Überwachungsbereichs erweitert werden.

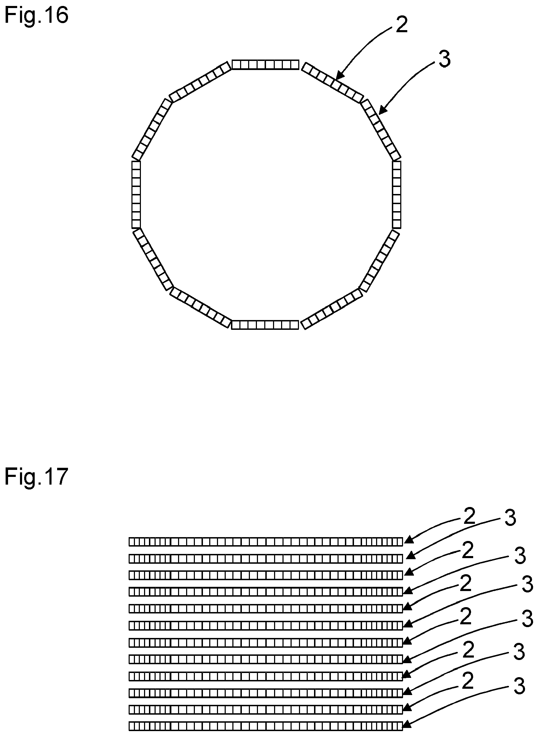

Gemäß Figur 16 sind die Sendeelemente 2 und/oder die Empfangselemente 3 in einem Vollkreis angeordnet.

Dadurch ist ein ringförmiger oder auch ein hohlzylindrischer Überwachungsbereich realisierbar. Vorteilhaft wird dadurch ein Schutzfeld mit einer Winkelausdehnung von 360° realisiert. Die Lichtstrahlen werden dabei in einem Winkelbereich von 360° von den Sendeelementen 2 ausgesendet und in einem Winkelbereich von 360° von den Empfangselementen 3 empfangen. Beispielsweise ist ein einziges Zeilenelement in einem 360° Vollkreis angeordnet. Dabei ist das Substrat der Zeilenelemente so dünn ausgeführt, dass sich das Zeilenelement einer Krümmung des Vollkreises anpassen kann

Beispielsweise sind die Sendeelemente 2 und/oder die Empfangselemente 3 auf einer flexiblen Leiterplatte angeordnet.

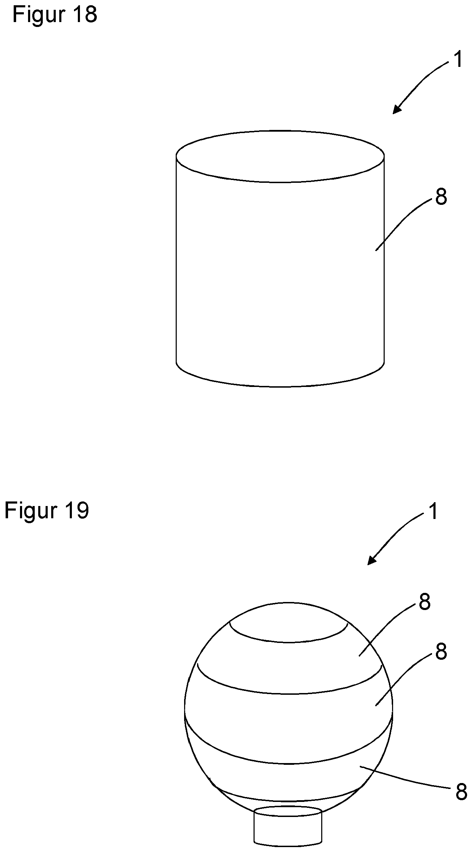

Gemäß Figur 18 sind die Sendeelemente und/oder die Empfangselemente zylinderförmig angeordnet. Die Linse 8 ist dabei ebenfalls zylinderförmig ausgebildet und um die Sendeelemente und/oder die Empfangselemente herum angeordnet.

Beispielsweise sind die Sendeelemente und/oder die Empfangselemente auf einem starren Kunststoffträger angeordnet. Bei dem starren Kunststoffträger handelt es sich beispielsweise um eine dreidimensionale starre Leiterplatte, welche direkt mit den Sendeelementen oder den Empfangselementen bestückt wird. Beispielsweise kann der Kunststoffträger als hochintegriertes MID-Teil (Molded Interconnected Device bzw. spritzgegossener Schaltungsträger) hergestellt sein. Als Molded Interconnect Devices, kurz MID, werden elektronische Bauteile bezeichnet, bei denen metallische Leiterbahnen auf und innerhalb spritzgegossener Kunststoffträger integriert werden.

Beispielsweise ist pro Winkelgrad mindestens ein Sendeelement und/oder mindestens ein Empfangselement angeordnet.

Dadurch ist pro Winkelgrad mindestens ein Entfernungsmesswert verfügbar. Bei der Verwendung von mehr als einem Sendeelement und/oder Empfangselement pro Winkelgrad wird die Auflösung weiter erhöht. Bei beispielsweise einer Pixelbreite von 20 µm und einem Zylinderradius von 30 mm kann so eine Winkelauflösung von 0,38° erreicht werden.

Die Steuer- und Auswerteeinheit ist beispielsweise von einem Logikbaustein, insbesondere vom Typ CPLD (Complex Programmable Logic Device) oder FPGA (Field Programmable Gate Array) gebildet.

Gemäß Figur 19 sind die Sendeelemente und/oder die Empfangselemente kugelabschnittsförmig oder kugelförmig angeordnet. Die Linse 8 ist dabei ebenfalls kugelabschnittsförmig mit einzelnen zylinderförmigen Abschnitten ausgebildet und um die Sendeelemente und/oder die Empfangselemente herum angeordnet.

### Bezugszeichen:

- 1: Laserscanner
- 2: Sendelemente
- 3: Empfangselemente
- 4: Steuer- und Auswerteeinheit
- 5: Objekt
- 6: Gehäuse
- 7: Lichtstrahlen
- 8: Linse

- f: Brennweite
- r: Radius
- n': Brechungsindex

## Patentansprüche

1. Laserscanner (1) mit einer Vielzahl von Sendeelementen (2) und einer Vielzahl von Empfangselementen (3) und einer Steuer- und Auswerteeinheit (4) zur Auswertung der Lichtlaufzeit von Lichtstrahlen (7) von den Sendeelementen (2) über ein Objekt (5) zu den Empfangselementen (3), wobei die Sendeelemente (2) und die Empfangselemente (3) bogenabschnittsförmig in einem gemeinsamen Gehäuse (6) angeordnet sind, wobei die Lichtstrahlen (7) in verschiedenen Winkelrichtungen fächerförmig ausgesendet und/oder empfangen werden, **dadurch gekennzeichnet, dass**
vor jedem Empfangselement (3) mindestens eine bogenabschnittsförmige Linse (8) angeordnet ist, die sich über mehrere Empfangselemente (3) erstreckt.

2. Laserscanner (1) nach Anspruch 1, **dadurch gekennzeichnet, dass** vor jedem Sendeelement (2) und vor jedem Empfangselement (3) mindestens eine bogenabschnittsförmige Linse (8) angeordnet ist, die sich über mehrere Sendeelemente (2) und mehrere Empfangselemente (3) erstreckt.

3. Laserscanner (1) nach mindestens einem der vorhergehenden Ansprüche, **dadurch gekennzeichnet, dass** die Empfangselemente (3) und/oder die Sendeelemente (2) simultan ausgewertet werden.

4. Laserscanner (1) nach mindestens einem der vorhergehenden Ansprüche, **dadurch gekennzeichnet, dass** die optischen Achsen der Sendeelemente (2) und/oder die optischen Achsen der Empfangselemente (3) in einer gemeinsamen Ebene liegen.

5. Laserscanner (1) nach mindestens einem der vorhergehenden Ansprüche, **dadurch gekennzeichnet, dass** ein Bogenabschnitt und/oder ein Kreisabschnitt der Linse (8) mindestens 30°, mindestens 45°, mindestens 60°, mindestens 90°, mindestens 120°, mindestens 180°, mindestens 270° oder 360° beträgt.

6. Laserscanner (1) nach mindestens einem der vorhergehenden Ansprüche, **dadurch gekennzeichnet, dass** die Linse (8) torusabschnittsförmig ist.

7. Laserscanner (1) nach mindestens einem der vorhergehenden Ansprüche, **dadurch gekennzeichnet, dass** die Linse (8) kugelteilabschnittsförmig oder kugelschalenteilabschnittsförmig mit einem Radius r (r) ist.

8. Laserscanner (1) nach mindestens einem der vorhergehenden Ansprüche, **dadurch gekennzeichnet, dass** das Material der Linse (8) einen Brechungsindex n' > 1 aufweist, wobei eine Brennweite f (f) der Linse (8) kleiner dem Radius r (r) der Linse (8) ist.

9. Laserscanner (1) nach mindestens einem der vorhergehenden Ansprüche, **dadurch gekennzeichnet, dass** die Empfangselemente (3) von Photoempfängern als Zeilenelemente gebildet sind.

10. Laserscanner (1) nach mindestens einem der vorhergehenden Ansprüche, **dadurch gekennzeichnet, dass** die Sendeelemente (2) und/oder die Empfangselemente (3) kreisabschnittsförmig äquidistant angeordnet sind.

11. Laserscanner (1) nach mindestens einem der vorhergehenden Ansprüche, **dadurch gekennzeichnet, dass** die Sendeelemente (2) und/oder die Empfangselemente (3) in einer Matrix mit mindestens zwei Reihen angeordnet sind.

12. Laserscanner (1) nach mindestens einem der vorhergehenden Ansprüche, **dadurch gekennzeichnet, dass** die Sendeelemente (2) und/oder die Empfangselemente (3) in einem Vollkreis angeordnet sind.

13. Laserscanner (1) nach mindestens einem der vorhergehenden Ansprüche, **dadurch gekennzeichnet, dass** die Sendeelemente (2) und/oder die Empfangselemente (3) auf einer flexiblen Leiterplatte angeordnet sind.

14. Laserscanner (1) nach mindestens einem der vorhergehenden Ansprüche, **dadurch gekennzeichnet, dass** die Sendeelemente (2) und/oder die Empfangselemente (3) teilkreisförmig, kreisabschnittsförmig, kreisförmig, teilzylinderförmig, zylinderförmig, teilkugelförmig, kugelabschnittsförmig oder kugelförmig angeordnet sind.

15. Laserscanner (1) nach mindestens einem der vorhergehenden Ansprüche, **dadurch gekennzeichnet, dass** pro Winkelgrad mindestens ein Sendeelement (2) und/oder mindestens ein Empfangselement (3) angeordnet ist.

16. Laserscanner (1) nach mindestens einem der vorhergehenden Ansprüche, **dadurch gekennzeichnet, dass** die Steuer- und Auswerteeinheit (4) von einem Logikbaustein, insbesondere vom Typ CPLD, Complex Programmable Logic Device oder FPGA, Field Programmable Gate Array gebildet ist.
